# EUROPÄISCHE PATENTSCHRIFT

(11) **EP 0 431 300 B1**
(45) Veröffentlichungstag und Bekanntmachung des Hinweises auf die Patenterteilung: **26.01.1994**
(21) Anmeldenummer: 90120464.4
(22) Anmeldetag: 25.10.1990
(51) Int. Cl.: G01G 11/08, F04B 11/00

(54) **Verfahren und Vorrichtung zum pulsationsfreien kontinuierlichen gravimetrischen Dosieren**
Process and device for continuous gravimetric dosing without pulsations
Procédé et dispositif pour le dosage continu gravimétrique sans pulsations

(30) Priorität: 24.11.1989 DE 3938898
(43) Veröffentlichungstag der Anmeldung: 12.06.1991
(73) Patentinhaber: SARTORIUS AG, 37075 Göttingen (DE)
(72) Erfinder: von der Haar, Paul, W-3400 Göttingen (DE); Pandit, Madhukar, Prof., W-6750 Kaiserslautern (DE); Merz, Hermann, W-6670 St. Ingbert (DE)
(74) Vertreter: Köhler, Rudolf

(56) Entgegenhaltungen:
- FR-A- 2 096 275
- CHEM.- ING.- TECH., vol. 59, no. 6, 1987, Weinheim, DE, pages 501-504; K.Memmert et al.: "Einsatz einer mikroprozessorgeregelten Dosiereinrichtung in der Biotechnologie"'
- BIOMEDIZINISCHE TECHNIK, vol. 35, no. 1/2, January 1990, Berlin, DE, pages 5-9; H. Merz et al: "Ein steriles, geregeltes, pulsationsarmes Präzisionsdosiersystem für die Biomedizintechnik"
- CHEM.- ING.- TECH., vol. 60, no. 9, 1988, Weinheim, DE, pages 672-685; G. Vetter et al: "Durchflusskontrolle kleiner Dosierpumpen bei stetiger und pulsierender Strömung"

## Beschreibung

Die Erfindung bezieht sich zum einen auf ein Verfahren zur gravimetrischen Regelung eines Massenstromes von einem bzw. in einen Behälter, der sich auf einer Waage befindet, unter Benutzung einer pulsierenden Dosierpumpe, und zum anderen auf eine Vorrichtung zur gravimetrischen Regelung eines Massenstromes mit einer Dosierpumpe, die das Dosiergut von einem bzw. in einen Behälter, der sich auf einer Waage befindet, dosiert, wobei die Förderstärke der Dosierpumpe pulsierende Anteile enthält, und mit einer Regeleinheit, die aufgrund des Ausgangssignals der Waage die Förderstärke der Dosierpumpe so regelt, daß der zeitliche Mittelwert der Förderstärke einen vorgegebenen Sollwert erreicht.

Ein Verfahren und eine Vorrichtung dieser Art sind aus dem Zeitschriftenartikel "Einsatz einer mikroprozessorgeregelten Dosiereinrichtung in der Biotechnologie" von K. Memmert, R. Uhlendorf und C. Wandrey in Chemie-Ingenieur-Technik 59 (1987) Nr. 6, Seite 501-504 bekannt. Weiterhin ist aus der FR-A- 2096275 (DE-A- 2127976) eine Doppelkolbenpumpe bekannt.

Nachteilig an diesem bekannten Verfahren und dieser bekannten Vorrichtung ist, daß für den Einsatz unter sterilen Bedingungen praktisch nur Pumpen bekannt sind, deren Förderstrom aus einzelnen Förderimpulsen zusammengesetzt ist. Als Beispiel werden in dem oben angegebenen Artikel Schlauchpumpen und Membranpumpen genannt. Für viele Anwendungen stört diese Pulsation nicht, und es reicht aus, den zeitlichen Mittelwert auf dem vorgegebenen Sollwert zu halten. Für manche Anwendungen - besonders bei sehr geringen Dosierströmen - stört dieser pulsierende Anteil jedoch, und es ist die Aufgabe der Erfindung, ein Verfahren und eine Vorrichtung zur pulsationsfreien gravimetrischen Dosierung anzugeben.

Erfindungsgemäß wird dies beim Verfahren zur gravimetrischen Regelung eines Massenstromes dadurch erreicht, daß das Ausgangssignal der Waage digital gefiltert wird, daß der zeitliche Verlauf des Massenstromes aus dem gefilterten Wägesignal zyklusweise geschätzt wird, daß aus diesem Schätzwert des zeitlichen Verlaufes des Massenstromes der zeitliche Verlauf eines Hilfsmassenstromes berechnet wird, der die Pulsation des Massenstromes der pulsierenden und geregelten Dosierpumpe ausgleicht und daß aus dem zeitlichen Verlauf des Hilfsmassenstromes ein Drehzahlverlauf zur Ansteuerung einer Hilfsdosierpumpe berechnet wird.

Bei der Vorrichtung zur gravimetrischen Regelung eines Massenstromes wird dies dadurch erreicht, daß der Dosierpumpe eine Hilfsdosierpumpe parallel geschaltet ist, daß die Förderstärke der Hilfsdosierpumpe von der Regeleinheit so steuerbar ist, daß die Summe der Förderstärken der beiden Pumpen pulsationsfrei ist und daß die Förderstärke der Hauptdosierpumpe von der Regeleinheit so regelbar ist, daß die Summe der Forderstärken auf dem vorgegebenen Sollwert haltbar ist.

Vorteilhafte Ausgestaltungen ergeben sich aus den abhängigen Ansprüchen.

Die Erfindung wird im folgenden anhand der Figuren beschrieben. Dabei zeigt:
- Fig. 1: eine schematische Darstellung der Dosiervorrichtung,
- Fig. 2: ein Flußdiagramm des Dosierverfahrens,
- Fig. 3: den zeitlichen Verlauf der Förderstärke einer Schlauchpumpe,
- Fig. 4: den zeitlichen Verlauf der Förderstärke der Hilfsdosierpumpe und
- Fig. 5: ein Schema eines digitalen Dreifachpolynomfilters.

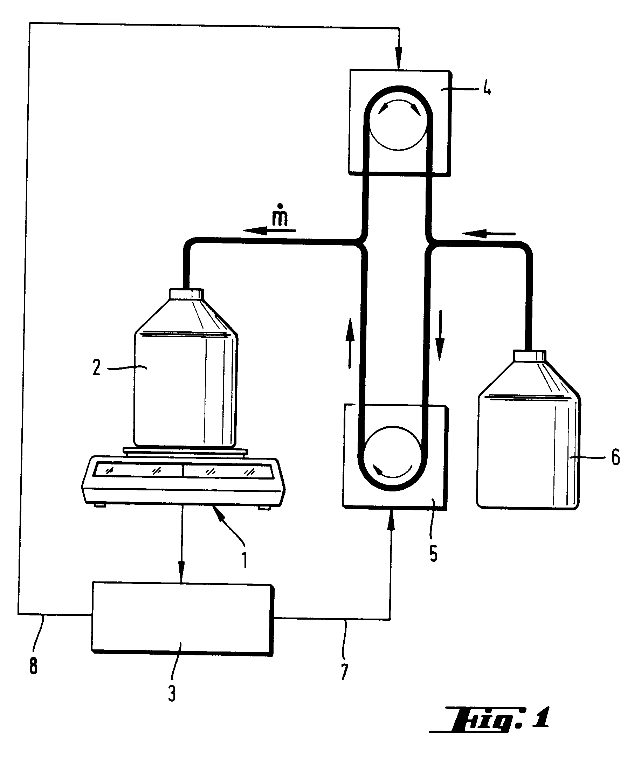

In der schematischen Darstellung der Dosiervorrichtung in Fig. 1 ist das Prozeßgefäß, in das dosiert werden soll, mit 2 bezeichnet. Dieses Prozeßgefäß 2 steht auf einer Waage 1, deren Ausgangssignal einer Regeleinheit 3 zugeführt wird. Diese Regeleinheit 3 steuert einmal über die Leitung 7 die Dosierpumpe 5, die das zu dosierende Medium aus einem Vorratsbehälter 6 in das Prozeßgefäß 2 fördert. Zum anderen steuert die Regeleinheit 3 über die Leitung 8 eine zusätzliche Hilfsdosierpumpe 4.

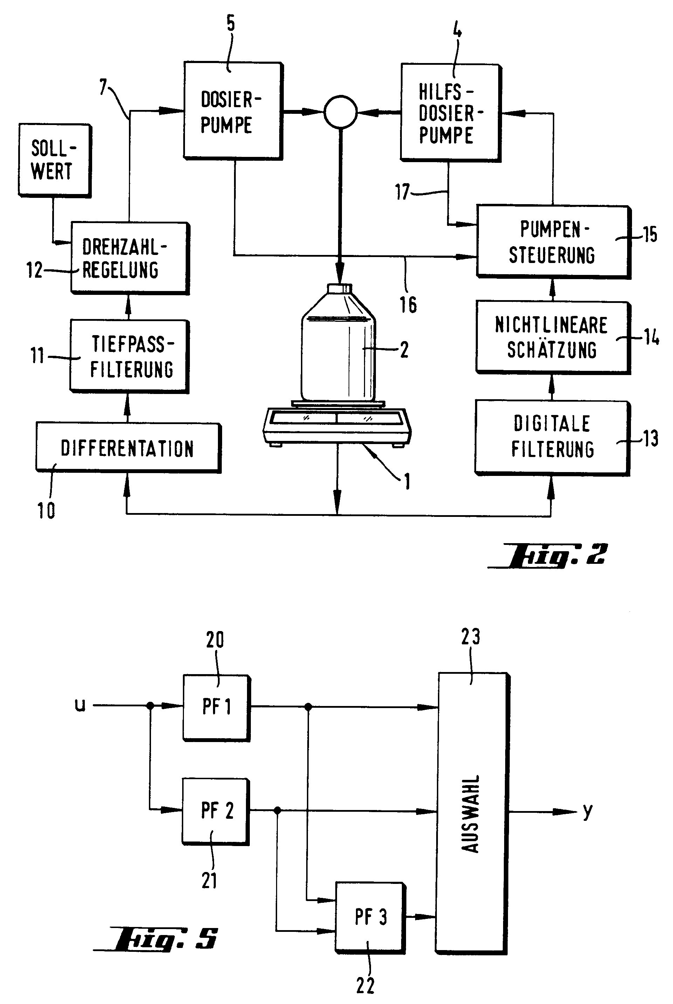

Das Zusammenspiel dieser Komponenten bei der Dosierung ergibt sich aus dem Flußdiagramm in Fig. 2. In der Mitte sind das Prozeßgefäß 2 und die Waage 1 gezeigt. Das Waagenausgangssignal ist proportional zur Gesamtmasse des Prozeßgefäßes 2 mit Inhalt. Durch Differentiation in der Funktionsgruppe 10 wird die Massenänderung pro Zeiteinheit und damit der momentane Massenzufluß ermittelt. Dieser Wert wird in der Funktionsgruppe 11 durch einen Tiefpaß gefiltert und dadurch kurzzeitige Störungen im Ausgangssignal der Waage 1 und die pulsierenden Anteile im Massenfluß unterdrückt. Dieser gemittelte Wert für den Massenzufluß wird in der Funktionsgruppe 12 mit dem vorgegebenen Sollwert verglichen, und je nach Ergebnis dieses Vergleiches wird die Drehzahl der Schlauchpumpe 5 erhöht, erniedrigt oder konstant gelassen. - Diese eben beschriebene und in Fig. 2 links gezeichnete Regelschleife ist bereits bekannt.

Zusätzlich ist nun in Fig. 2 eine zweite, rechts gezeichnete Schleife vorgesehen, die die Hilfsdosierpumpe 4 ansteuert. In dieser Schleife wird das Waagenausgangssignal zunächst in einem digitalen Filter 13 gefiltert. Dieses digitale Filter 13 kann z. B. ein Dreifachpolynomfilter sein, wie es weiter unten anhand von Fig. 5 noch genauer beschrieben wird. Das gefilterte Signal wird einem nichtlinearen Schätzer 14 zugeführt, in dem der zeitliche Verlauf eines Hilfsmassenstromes so geschätzt wird, daß die Summe aus dem Hilfsmassenstrom und dem Massenstrom der Dosierpumpe 5 zeitunabhängig, also pulsationsfrei, ist. Über eine Pumpensteuerung 15 wird dann die Hilfsdosierpumpe 4 so angesteuert, daß sie den geschätzten Hilfsmassenstrom erzeugt. - Die in Fig. 2 rechts gezeichnete Schleife mit der Hilfsdosierpumpe 4 dient also nur der Glättung der Pulsation der Dosierpumpe 5, die Einstellung auf den geforderten Sollwert des zu dosierenden Massenstromes und die langzeitkonstante Einhaltung dieses Sollwertes erfolgt unverändert durch die Regelung der Drehzahl der Dosierpumpe 5 über die in Fig. 2 links gezeichnete Regelschleife. Die Pumpensteuerung 15 benötigt zur Synchronisierung der Drehbewegung der Hilfsdosierpumpe 4 mit der Drehbewegung der Dosierpumpe 5 die Information über die aktuelle Winkellagen der Hilfsdosierpumpe 4 und der Dosierpumpe 5. Diese Information erhält sie über die Leitungen 16 und 17.

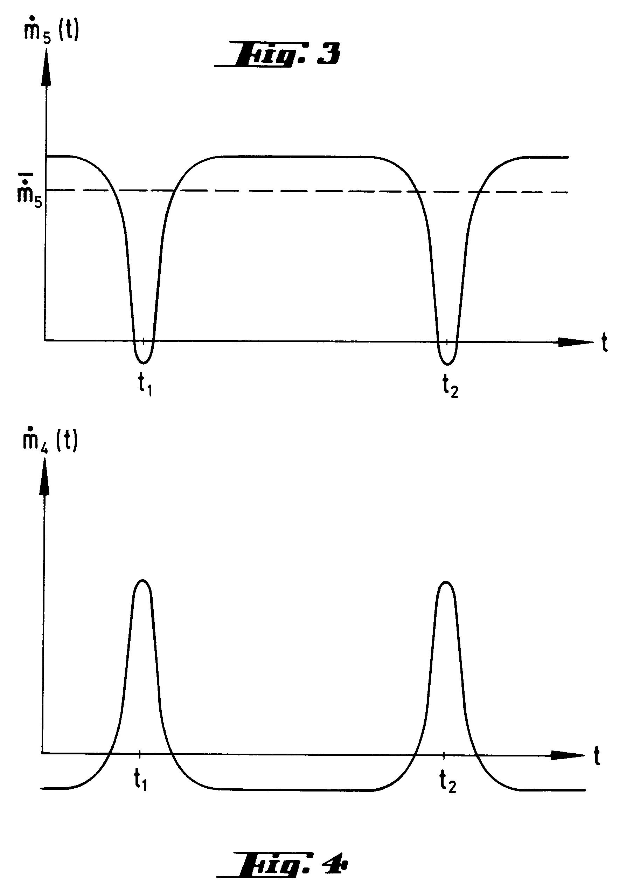

Ein Beispiel für den zeitabhängigen Verlauf der Förderstärke einer Schlauchpumpe ist in Fig. 3 gezeigt. Waagerecht ist die Zeit t aufgetragen, senkrecht die Förderstärke m₅. Nach einer etwa konstanten Förderstärke während des größten Teils einer Umdrehung folgt jeweils ein starker Einbruch, der bis zu negativen Werten der Förderstärke (Umkehr der Förderrichtung) gehen kann, zu dem Zeitpunkt, in dem die Quetschrolle die Quetschphase beendet und der Schlauch wieder in seine runde Querschnittsform zurückkehrt. Die Zeit von t₁ bis t₂ entspricht bei einem Pumpenkopf mit zwei Quetschrollen einer halben Umdrehung des Pumpenkopfes. - Der zeitliche Mittelwert der Förderstärke ist in Fig. 3 gestrichelt eingezeichnet.

Um den in Fig. 3 gezeigten Verlauf der Förderstärke der Dosierpumpe 5 durch die Förderstarke einer Hilfsdosierpumpe 4 zu einer pulsationsfreien Gesamtförderstärke zu ergänzen, muß die Förderstärke der Hilfsdosierpumpe 4 den in Fig. 4 gezeigten Verlauf aufweisen. Dieser Verlauf wird vom Schätzer 14 (Fig. 2) nach mathematischen Methoden aus dem gefilterten Ausgangssignal der Waage 1 geschätzt und von der Pumpensteuerung 15 (Fig. 2) in entsprechende Stellbefehle für den Antrieb der Hilfsdosierpumpe 4 umgesetzt. Der Antrieb der Hilfsdosierpumpe 4 kann z. B. durch einen Schrittmotor erfolgen, wodurch sich eine einfache Steuerungsmoglichkeit sowohl vorwärts als auch rückwärts ergibt. Die Hilfsdosierpumpe 4 kann z. B. ebenfalls eine Schlauchpumpe sein wie die Dosierpumpe 5. In Fig. 4 ist der zeitliche Mittelwert der Förderstärke m₄ der Hilfsdosierpumpe Null, die Hilfsdosierpumpe 4 kann also immer im Bereich etwa konstanter Förderstärke pro Drehwinkel betrieben werden und braucht den Bereich in der Umgebung der Zeiten t₁ und t₂ in Fig. 3 nicht zu berühren. Dadurch ist der Umrechnungsfaktor zwischen Drehwinkel und Förderstärke für die Hilfsdosierpumpe 4 praktisch konstant und die Mathematik zur Umrechnung entsprechend einfach. - Dieser Betrieb der Hilfsdosierpumpe 4 mit der mittleren Förderstärke Null ist zwar besonders zweckmäßig, aber nicht unbedingt notwendig.

Der Schätzer 14 erhält seine Information über den Verlauf der Förderstärke der Hilfsdosierpumpe 4 am besten, indem in einer Lernphase die Dosierpumpe 5 stillsteht und die Hilfsdosierpumpe 4 einige Umdrehungen ausführt. Aus dem Ausgangssignal der Waage 1 unter dem Prozeßgefäß 2 kann der Schätzer 14 dann den Verlauf der Förderstärke der Hilfsdosierpumpe 4 entnehmen.
Der Schätzer 14 erhalt seine Information über den Verlauf der Förderstärke der Dosierpumpe 5, indem er aus dem Ausgangssignal der Waage 1 unter dem Prozeßgefäß 2 den zeitlichen Verlauf des Massenstromes m, welcher die Summe des Massenstromes m₅ der Dosierpumpe 5 und des Hilfsmassenstromes m₄ der Hilfsdosierpumpe 4 darstellt, schätzt. Wird der mit der Information aus der Lernphase berechenbare Hilfsmassenstrom m₄ der Hilfsdosierpumpe 4 von dem geschätzten Massenstrom m subtrahiert, liegt der zeitliche Verlauf des Massenstromes m₅ der Dosierpumpe 5 vor.

Die Schätzeinrichtung 14 liefert die Information über den aktuellen Massenstrom m mit einer durch die digitale Filterung 13 bedingten, konstanten Verzögerung, so daß das Steuerprofil für die Hilfsdosierpumpe 4 erst im nächstfolgenden Zyklus zur Kompensation verwendet wird.

Um kleine Störungen im Ausgangssignal der Waage 1 - die z. B. von Erschütterungen oder dem Aufprall des dosierten Mediums herrühren - zu unterdrücken, ohne die Reaktionsgeschwindigkeit der Waage und der Dosierregelung zu sehr herabzusetzen, ist vorteilhafterweise in der Waage 1 nur eine analoge Vorfilterung mit einer oberen Grenzfrequenz von etwa 20 Hz eingebaut, und das in Fig. 2 gezeigte digitale Filter 13 besitzt die in Fig. 5 gezeigte Filterstruktur. Dieses sogenannte Dreifachpolynomfilter besteht aus drei Polynomfiltern 20,21 und 22, durch die das digitale Ausgangssignal u der Waage 1 nach mathematischen Methoden von durch die analoge Vorfilterung nicht unterdruckten Störungen befreit wird. Die Ausgangssignale der einzelnen Polynomfilter werden über eine Auswahleinrichtung 23 zum endgültigen Filtersignal zusammengesetzt (Filterausgang y).

Alle im Flußdiagramm in Fig. 2 gezeigten Filter, Schätzer und Regelungsgruppen sind in Fig. 1 zu der Regeleinheit 3 zusammengefaßt. Wesentliche Teile dieser Regeleinheit können z. B. durch einen Mikroprozessor oder einen PC realisiert sein.

Die im vorstehenden anhand einer Zudosierung in ein Prozeßgefäß beschriebene Vorrichtung kann selbstverständlich auch mit umgekehrter Flußrichtung zum pulsationsfreien Abziehen einer Substanz aus einem Prozeßgefäß benutzt werden. Die in Fig. 1 eingezeichneten Fließrichtungen und Drehrichtungen der Pumpen sind dann umgekehrt.

## Patentansprüche

1. Verfahren zur gravimetrischen Regelung eines Massenstromes von einem bzw. in einen Behälter (2), der sich auf einer Waage (1) befindet, unter Benutzung einer pulsierenden Dosierpumpe (5), dadurch gekennzeichnet, daß das Ausgangssignal der Waage (1) digital gefiltert wird, daß der zeitliche Verlauf des Massenstromes aus dem gefilterten Wägesignal zyklusweise geschätzt wird, daß aus diesem Schätzwert des zeitlichen Verlaufes des Massenstromes der zeitliche Verlauf eines Hilfsmassenstromes berechnet wird, der die Pulsation des Massenstromes der pulsierenden und geregelten Dosierpumpe (5) ausgleicht und daß aus dem zeitlichen Verlauf des Hilfsmassenstromes ein Drehzahlverlauf zur Ansteuerung einer Hilfsdosierpumpe (4) berechnet wird.

2. Verfahren nach Anspruch 1, dadurch gekennzeichnet, daß das Ausgangssignal der Waage (1) analog vorgefiltert wird, bevor es dem digitalen Filter zugeführt wird, wobei die obere Grenzfrequenz dieses analogen Tiefpaßfilters zwischen 15 Hz und 25 Hz liegt.

3. Verfahren nach einem der Ansprüche 1 oder 2, dadurch gekennzeichnet , daß als Digitalfilter ein Dreifachpolynomfilter benutzt wird.

4. Verfahren nach einem der Ansprüche 1 bis 3, dadurch gekennzeichnet, daß der zeitliche Verlauf des Massenstromes mit einem nichtlinearen Schätzalgorithmus ermittelt wird.

5. Verfahren nach einem der Ansprüche 1 bis 4, dadurch gekennzeichnet, daß der zeitliche Mittelwert der Förderstärke der Hilfsdosierpumpe (4) Null ist.

6. Verfahren nach einem der Ansprüche 1 bis 5, dadurch gekennzeichnet, daß in einer Lernphase bei stillstehender Hilfsdosierpumpe (4) der zeitliche Verlauf des Massenstromes der Dosierpumpe (5) über mindestens einen Zyklus ermittelt wird.

7. Verfahren nach einem der Ansprüche 1 bis 5, dadurch gekennzeichnet, daß in einer Lernphase bei stillstehender Dosierpumpe (5) der zeitliche Verlauf des Massenstromes der Hilfsdosierpumpe (4) über mindestens einen Zyklus ermittelt wird.

8. Vorrichtung zur gravimetrischen Regelung eines Massenstromes mit einer Dosierpumpe (5), die das Dosiergut von einem bzw. in einen Behälter (2), der sich auf einer Waage (1) befindet, dosiert, wobei die Förderstärke der Dosierpumpe (5) pulsierende Anteile enthält, und mit einer Regeleinheit (3), die aufgrund des Ausgangssignals der Waage (1) die Förderstärke der Dosierpumpe (5) so regelt, daß der zeitliche Mittelwert der Förderstärke einen vorgegebenen Sollwert erreicht, dadurch gekennzeichnet, daß der Dosierpumpe (5) eine Hilfsdosierpumpe (4) parallel geschaltet ist, daß die Förderstärke, der Hilfsdosierpumpe (4) von der Regeleinheit (3) so steuerbar ist, daß die Summe der Förderstärken der beiden Pumpen (4,5) pulsationsfrei ist und daß die Förderstärke der Dosierpumpe (5) von der Regeleinheit (3) so regelbar ist, daß die Summe der Förderstärken auf dem vorgegebenen Sollwert haltbar ist.

9. Vorrichtung nach Anspruch 8, dadurch gekennzeichnet, daß die Dosierpumpe (5) und die Hilfsdosierpumpe (4) Schlauchpumpen sind.

10. Vorrichtung nach einem der Ansprüche 8 oder 9, dadurch gekennzeichnet, daß die Hilfsdosierpumpe (4) durch einen Schrittmotor angetrieben wird.

## Claims

1. Method for the gravimetric regulation of a mass flow from or into a container (2), which is disposed on a weighing machine (1), with the use of pulsating metering pump (5), characterised thereby, that the output signal of the weighing machine (1) is filtered digitally, that the temporal course of the mass flow is estimated for each cycle from the filtered weighing signal, that the temporal course of an auxiliary mass flow, which compensates for the pulsation of the mass flow of the pulsating and regulated metering pump (5), is computed from this estimated value of the temporal course of the mass flow and that a rotational speed course for the drive control of an auxiliary metering pump (4) is computed from the temporal course of the auxiliary mass flow.

2. Method according to claim 1, characterised thereby, that the output signal of the weighing machine (1) is preliminarily filtered in analog before it is fed to the digital filter, wherein the upper limit frequency of this analog low-pass filter lies between 15 and 25 hertz.

3. Method according to one of the claims 1 and 2, characterised thereby, that a triple polynomial filter is used as digital filter.

4. Method according to one of the claims 1 to 3, characterised thereby, that the temporal course of the mass flow is ascertained by a non-linear estimating algorithm.

5. Method according to one of the claims 1 to 4, characterised thereby, that the temporal mean value of the conveying intensity of the auxiliary metering pump (4) is zero.

6. Method according to one of the claims 1 to 5, characterised thereby, that the temporal course of the mass flow of the metering pump (5) is ascertained over at least one cycle in a learning phase with the auxiliary metering pump (4) at standstill.

7. Method according to one of the claims 1 to 5, characterised thereby, that the temporal course of the mass flow of the auxiliary metering pump (4) is ascertained over at leat one cycle in a learning phase with the metering pump (5) at standstill.

8. Device for the gravimetric regulation of a mass flow with a metering pump (5), which meters the stock that is to be metered from or into a container (2), which is disposed on a weighing machine ( 1), wherein the conveying intensity of the metering pump (5) contains pulsating components, and with a regulating unit (3), which on the basis of the output signal of the weighing machine (1) so regulates the conveying intensity of the metering pump (5) that the temporal mean value of the conveying intensity reaches a preset target value, characterised thereby, that an auxiliary metering pump (4) is connected in parallel with the metering pump (5), that the conveying intensity of the auxiliary metering pump (4) is so controllable by the regulating unit (3) that the sum of the conveying intensities of both the pumps (4, 5) is free from pulsations and that the conveying intensity of the metering pump (5) is so regulable by the regulating unit (3) that the sum of the conveying intensities is maintainable at the preset target value.

9. Device according to claim 8, characterised thereby, that the metering pump (5) and the auxiliary metering pump (4) are hose pumps.

10. Device according to one of the claims 8 and 9, characterised thereby, that the auxiliary metering pump (4) is driven by a stepping motor.

## Revendications

1. Procédé pour le réglage gravimétrique d'un courant massique d'un récipient ou dans un récipient (2), qui se trouve sur une balance, avec utilisation d'une pompe de dosage à pulsations (5), caractérisé en ce que le signal de sortie de la balance (1) est filtré numériquement, en ce que la variation du courant massique en fonction du temps est déterminée cycliquement à partir du signal filtré de la balance, en ce que, à partir de cette valeur estimative de la variation du courant massique en fonction du temps, est calculée la variation en fonction du temps d'un courant massique auxiliaire, lequel compense la pulsation du courant massique de la pompe de dosage à pulsations réglée (5) et en ce que, à partir de la variation en fonction du temps du courant massique auxiliaire est calculée une variation de vitesse de rotation pour la commande d'une pompe auxiliaire de dosage (4).

2. Procédé selon la revendication 1, caractérisé en ce que le signal de sortie de la balance (1) est préfiltré analogiquement avant d'arriver au filtre numérique, la fréquence supérieure de coupure de ce filtre passe-bas analogique se situant entre 15 et 25 Hz.

3. Procédé selon l'une des revendications 1 ou 2, caractérisé en ce que le filtre numérique utilisé est un filtre polynome triple.

4. Procédé selon l'une des revendications 1 à 3, caractérisé en ce que la variation en fonction du temps du courant massique est déterminée selon un algorithme d'estimation non linéaire.

5. Procédé selon l'une des revendications 1 à 4, caractérisé en ce que la valeur moyenne en fonction du temps de la force de refoulement de la pompe auxiliaire de dosage (4) est nulle.

6. Procédé selon l'une des revendications 1 à 5, caractérisé en ce que dans une phase d'étude, la pompe auxiliaire de dosage (4) étant arrêtée, la variation en fonction du temps du courant massique de la pompe de dosage (5) est déterminée sur un cycle au minimum.

7. Procédé selon l'une des revendications 1 à 5, caractérisé en ce que dans une phase d'étude, la pompe de dosage (5) étant arrêtée, la variation en fonction du temps du courant massique de la pompe auxiliaire de dosage (4) est déterminée sur un cycle au minimum.

8. Dispositif pour le réglage gravimétrique d'un courant massique, comportant une pompe de dosage (5), qui dose le produit à doser d'un récipient ou dans un récipient (2), qui se situe sur une balance (1), la force de refoulement de la pompe de dosage (5) ayant des composantes à pulsations et comportant une unité de réglage (3) qui, eu égard au signal de sortie de la balance (1), règle la force de refoulement de la pompe de dosage (5), de manière que la valeur moyenne de la force de refoulement en fonction du temps atteigne une valeur de consigne prédéfinie, caractérisé en ce que une pompe auxiliaire de dosage (4) est couplée en parallèle à la pompe de dosage (5), en ce que la force de refoulement de la pompe auxiliaire de dosage (4) peut être commandée par l'unité de réglage (3), de manière que la somme des forces de refoulement des deux pompes, 4,5) soit exempte de pulsations et en ce que la force de refoulement de la pompe de dosage (5) est réglable par l'unité de réglage (3) de manière que la somme des forces de refoulement soit maintenue à la valeur de consigne prédéfinie.

9. Dispositif selon la revendication 8, caractérisé en en ce que la pompe de dosage (5) et la pompe auxiliaire de dosage (4) sont des pompes tubulaires.

10. Dispositif selon l'une des revendications 8 ou 9, caractérisé en ce que la pompe auxiliaire de dosage (4) est actionnée par un moteur pas à pas.
